# EUROPEAN PATENT APPLICATION

(11) **EP 4 641 089 A1**
(43) Date of publication of application: **29.10.2025**
(21) Application number: 25166164.1
(22) Date of filing: 25.03.2025
(51) Int. Cl.: F23R 3/28, F23R 3/36

(54) **FUEL INJECTOR FOR A TURBINE ENGINE**

(30) Priority: 22.04.2024 US 202418642095
(71) Applicant: General Electric Company, Cincinnati, Ohio 45215 (US)
(72) Inventor: KNOLLE, Bernard Gustav, Evendale, 45215 (US); VENTURATO, Marco, Evendale, 45215 (US); SHEALY, James, Evendale, 45215 (US); ROYER, Brian, Evendale, 45215 (US); BROOKE, Casey McCutcheon, Evendale, 45215 (US)
(74) Representative: Openshaw & Co.

(57) **Abstract**

A gas turbine engine (10) includes a compressor section (22), combustion section (28), and turbine section (32) is serial flow arrangement. A fuel injector (102) supplies a mixture of fuel and air for combustion within the combustion section (28). An outer wall (150) defines a mixing passage (154) extending along a stream-wise direction including a first mixing region (240) and a second mixing region (242). A first fuel passage (164) supplies a first fuel (F1) to the first mixing region (240) and an air passage (180) supplies a supply of air (A) to the first mixing region (240). A second fuel passage (166) supplies a second fuel (F2) to the second mixing region (242).

## Description

### TECHNICAL FIELD

The present subject matter relates generally to a fuel injector for supplying a mixture of fuel and air to a combustor for combustion to drive a turbine engine.

### BACKGROUND

A gas turbine engine typically includes a fan and a turbomachine. The turbomachine generally includes an inlet, one or more compressors, a combustor, and at least one turbine. The compressors compress air which is channeled to the combustor where it is mixed with fuel. The mixture is then ignited for generating hot combustion gases. The combustion gases are channeled to the turbine(s) which extracts energy from the combustion gases for powering the compressor(s), as well as for producing useful work to propel an aircraft in flight or to power a load, such as an electrical generator.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic representation of a turbine engine including a combustion section, in accordance with an aspect of the present disclosure.
FIG. 2 is a schematic, cross-sectional view of the combustion section of FIG. 1 taken along line II-II with an annular arrangement of fuel nozzle assemblies, in accordance with an aspect of the present disclosure.
FIG. 3 is a schematic of a side cross-sectional view taken along line III-III of FIG. 2, in accordance with an aspect of the present disclosure.
FIG. 4 is a cross-sectional view of a fuel injector for use with the fuel nozzle assemblies of FIG. 2, in accordance with an aspect of the present disclosure.
FIG. 5 is an enlarged view of a portion V of FIG. 4 showing a turbulator, in accordance with an aspect of the present disclosure.
FIG. 6 is a cross-sectional view of a fuel injector having a centerbody with a closed aft end that can be used with the set of fuel injectors of FIG. 3, in accordance with an aspect of the present disclosure.
FIG. 7 is a cross-sectional view of a fuel injector having a first center body passage and a second centerbody passage each provided within a centerbody that can be used with the set of fuel injectors of FIG. 3, in accordance with an aspect of the present disclosure.
FIG. 8 is a cross-sectional view of a fuel injector having a closed centerbody that can be used with the set of fuel injectors of FIG. 3, in accordance with an aspect of the present disclosure.
FIG. 9 is a cross-sectional view of a fuel injector including first, second, and third fuel supplies that can be used with the set of fuel injectors of FIG. 3, in accordance with an aspect of the present disclosure.
FIG. 10 is a cross-sectional view of a fuel injector including a centerbody having a longitudinal center body passage that can be used with the set of fuel injectors of FIG. 3, in accordance with an aspect of the present disclosure.
FIG. 11 is a cross-sectional view of a cyclonic fuel injector including a first fuel supply and a second fuel supply, in accordance with an aspect of the present disclosure.
FIG. 12 is a cross-sectional view of a cyclonic fuel injector including a first fuel supply and a second fuel supply at a protuberance, in accordance with an aspect of the present disclosure.

### DETAILED DESCRIPTION

Aspects of the disclosure herein are directed to a fuel injector for an engine, and more specifically, to a fuel injector having a first mixing length and a second mixing length for mixing different fuels for combustion. For purposes of illustration, the present disclosure will be described with respect to a fuel injector located within a combustor for a turbine engine. It will be understood, however, that aspects of the disclosure herein are not so limited and may have general applicability within an engine that combusts a fuel to drive the engine, as well as in non-aircraft applications or other turbine environments, such as other mobile applications and non-mobile industrial, commercial, and residential applications.

Additionally, aspects of the disclosure herein provide a fuel injector capable of use or incorporation of low emission fuels, such as hydrogen fuels, non-diluent hydrogen fuels, or fuels that are capable of less than 15 parts per million of nitrous oxide emissions, for example. Low emission fuels, such as the hydrogen fuels or non-diluent hydrogen fuels, have higher flame speeds and reactivity than traditional liquid fuels or atomized liquid fuels, which can result in a greater opportunity for flashback or autoignition at the fuel injector, which can be detrimental to the fuel injector or surrounding environment. For example, a laminar flame speed for hydrogen fuel can be about 10 times that of a laminar flame speed for hydrocarbon fuels, as well as requiring a lesser ignition energy for hydrogen fuels as compared to hydrocarbon fuels. Furthermore, such reactivity during the use of gaseous fuels can prevent the use of fuel injectors having long mixing lengths that are required to suitably intermix liquid fuels, resulting in an inconsistency in mixing or timing when utilizing fuel blends having both liquid fuels and gaseous fuels within a common fuel injector. Gaseous fuels such as hydrogen can also embrittle alloys utilized in the fuel injector, making managing of thermal gradients within the fuel injector challenging. The fuel injector described herein is capable of utilizing low-emission fuels with higher flame speeds, as well as achieving sufficient mixing of the fuel and air to ensure low pressure drop and reduce or eliminate the opportunity for flashback and autoignition.

Additionally, aspects of the disclosure herein provide a fuel injector capable of use or incorporation of low emission fuels, such as hydrogen fuels, non-diluent hydrogen fuels, or fuels that are capable of zero emissions, zero carbon emissions, near-zero emissions, or near-zero carbon emissions. In a non-limiting example, such a fuel can be a pure form of hydrogen without any diluents, or a non-diluent hydrogen gas fuel. In some examples, no diluent is added to the hydrogen fuel and the fuel is substantially completely diatomic hydrogen without diluent. As used herein, the term "substantially completely," as used to describe the amount of a particular element or molecule (e.g., diatomic hydrogen), refers to at least 99% by mass of the described portion of the element or molecule, such as at least 97.5%, such as at least 95%, such as at least 92.5%, such as at least 90%, such as at least 85%, or such as at least 75% by mass of the described portion of the element or molecule.

Reference will now be made in detail to the architecture, and in particular the fuel injector, located within a combustion section of a turbine engine, one or more examples of which are illustrated in the accompanying drawings. The detailed description uses numerical and letter designations to refer to features in the drawings.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first," "second," and "third" may be used interchangeably to distinguish one component from another and are not intended to signify location or importance of the individual components.

The terms "forward" and "aft" refer to relative positions within a gas turbine engine or vehicle and refer to the normal operational attitude of the gas turbine engine or vehicle. For example, within a gas turbine engine, forward refers to a position closer to an engine inlet and aft refers to a position closer to an engine nozzle or exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid, or multi-phase. The term "fluid communication" means that a fluid is capable of making the connection between the areas specified.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, fluidly coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order, and relative sizes reflected in the drawings attached hereto can vary.

The singular forms "a," "an," and "the" include plural references unless the context clearly dictates otherwise. Furthermore, as used herein, the term "set" or a "set" of elements can be any number of elements, including only one.

Approximating language, as used herein throughout the specification and claims, is applied to modify any quantitative representation that could permissibly vary without resulting in a change in the basic function to which it is related. Accordingly, a value modified by a term or terms, such as "about," "approximately," "generally," "relatively," and "substantially" are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

In certain exemplary embodiments of the present disclosure, a turbine engine defining a centerline and a circumferential direction is provided. The turbine engine may generally include a turbomachine and a rotor assembly. The rotor assembly may be driven by the turbomachine. The turbomachine, the rotor assembly, or both may define a substantially annular flow path relative to the centerline of the turbine engine.

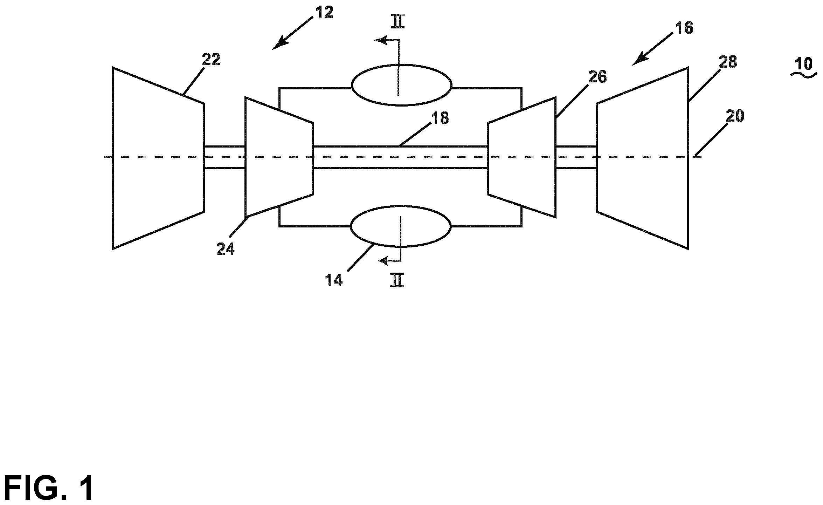

FIG. 1 is a schematic view of a turbine engine 10. As a non-limiting example, the turbine engine 10 can be used within an aircraft. The turbine engine 10 includes, at least, a compression section 12, a combustion section 14, and a turbine section 16 in serial flow arrangement. A drive shaft 18 rotationally couples the compression section 12 and the turbine section 16, such that rotation of one affects the rotation of the other and defines a rotational axis or engine centerline 20 for the turbine engine 10.

The compression section 12 can include a low-pressure (LP) compressor 22, and a high-pressure (HP) compressor 24 serially fluidly coupled to one another. The turbine section 16 can include an LP turbine 26, and an HP turbine 28 serially fluidly coupled to one another. The drive shaft 18 operatively couples the LP compressor 22, the HP compressor 24, the LP turbine 26 and the HP turbine 28 together. Alternatively, the drive shaft 18 can include an LP drive shaft (not illustrated) and an HP drive shaft (not illustrated). The LP drive shaft couples the LP compressor 22 to the LP turbine 26, and the HP drive shaft couples the HP compressor 24 to the HP turbine 28. An LP spool is defined as the combination of the LP compressor 22, the LP turbine 26, and the LP drive shaft such that the rotation of the LP turbine 26 applies a driving force to the LP drive shaft, which in turn rotates the LP compressor 22. An HP spool is defined as the combination of the HP compressor 24, the HP turbine 28, and the HP drive shaft such that the rotation of the HP turbine 28 applies a driving force to the HP drive shaft which in turn rotates the HP compressor 24.

The compression section 12 includes a plurality of axially spaced stages. Each stage includes a set of circumferentially spaced rotating blades and a set of circumferentially spaced stationary vanes. The compressor blades for a stage of the compression section 12 can be mounted to a disk, which is mounted to the drive shaft 18. Each set of blades for a given stage can have its own disk. The vanes of the compression section 12 can be mounted to a casing which can extend circumferentially about the turbine engine 10. It will be appreciated that the representation of the compression section 12 is merely schematic and that there can be any number of stages. Further, it is contemplated, that there can be any other number of components within the compression section 12.

Similar to the compression section 12, the turbine section 16 includes a plurality of axially spaced stages, with each stage having a set of circumferentially spaced, rotating blades and a set of circumferentially spaced, stationary vanes. The turbine blades for a stage of the turbine section 16 can be mounted to a disk which is mounted to the drive shaft 18. Each set of blades for a given stage can have its own disk. The vanes of the turbine section 16 can be mounted to the casing in a circumferential manner. It is noted that there can be any number of blades, vanes and turbine stages as the illustrated turbine section is merely a schematic representation. Further, it is contemplated, that there can be any other number of components within the turbine section 16.

The combustion section 14 is provided serially between the compression section 12 and the turbine section 16. The combustion section 14 is fluidly coupled to at least a portion of the compression section 12 and the turbine section 16 such that the combustion section 14 at least partially fluidly couples the compression section 12 to the turbine section 16. As a non-limiting example, the combustion section 14 can be fluidly coupled to the HP compressor 24 at an upstream end of the combustion section 14 and to the HP turbine 28 at a downstream end of the combustion section 14.

During operation of the turbine engine 10, ambient or atmospheric air is drawn into the compression section 12 via a fan (not illustrated) upstream of the compression section 12, where the air is compressed defining a compressed air. The compressed air then flows into the combustion section 14 where the compressed air is mixed with fuel and ignited, thereby generating combustion gases. Some work is extracted from these combustion gases by the HP turbine 28, which drives the HP compressor 24. The combustion gases are discharged into the LP turbine 26, which extracts additional work to drive the LP compressor 22, and the exhaust gas is ultimately discharged from the turbine engine 10 via an exhaust section (not illustrated) downstream of the turbine section 16. The driving of the LP turbine 26 drives the LP spool to rotate the fan (not illustrated) and the LP compressor 22. The compressed air flow and the combustion gases can together define a working air flow that flows through the fan, compression section 12, combustion section 14, and turbine section 16 of the turbine engine 10.

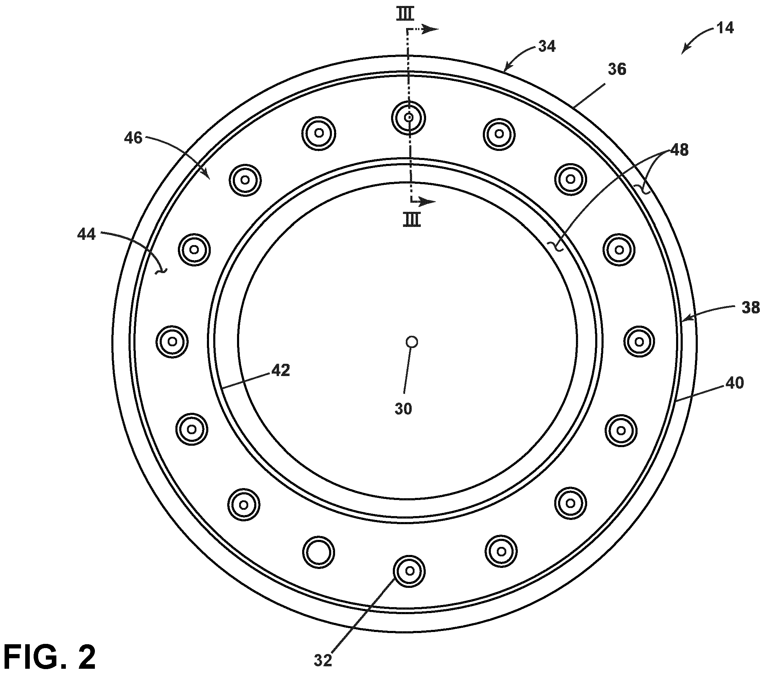

FIG. 2 depicts a cross-sectional view of the combustion section 14 along line II-II of FIG. 1. For purposes of illustration, the drive shaft 18 (FIG. 1) has been removed. The combustion section 14 includes a combustor 34. The combustor 34 includes a dome wall 44 including a set of fuel nozzles 32. The set of fuel nozzles 32 annularly arranged about a combustor centerline 30. The combustor centerline 30 can be the engine centerline 20 (FIG. 1) of the turbine engine 10 (FIG. 1). Additionally, or alternatively, the combustor centerline 30 can be a centerline for the combustion section 14, a single combustor, or a set of combustors that are arranged about the combustor centerline 30. As used herein, each fuel nozzle of the set of fuel nozzles 32 is a body including a central channel (not illustrated) that supplies a flow of fuel and/or compressed air to the combustion section 14.

The set of fuel nozzles 32 can include rich cups, lean cups, or a combination of both rich and lean cups annularly provided about the engine centerline. It should be appreciated that the annular arrangement of fuel nozzles can be one or multiple fuel nozzles and one or more of the fuel nozzles can have different characteristics. The combustor 34 is defined, at least in part, by a combustor liner 38. The combustor 34 can have a can, can-annular, or annular arrangement depending on the type of engine in which the combustor 34 is located. In a non-limiting example, the combustor 34 can have a combination arrangement as further described herein located within a casing 36 of the engine. The combustor liner 38, as illustrated by way of example, can be annular. The combustor liner 38 can include an outer combustor liner 40 and an inner combustor liner 42 concentric with respect to each other and annular about the engine centerline. The dome wall 44 together with the combustor liner 38 can define a combustion chamber 46 having an annular configuration disposed about the combustion centerline 30. The set of fuel nozzles 32 can be fluidly coupled to the combustion chamber 46. A compressed air passageway 48 can be defined at least in part by both the combustor liner 38 and the casing 36.

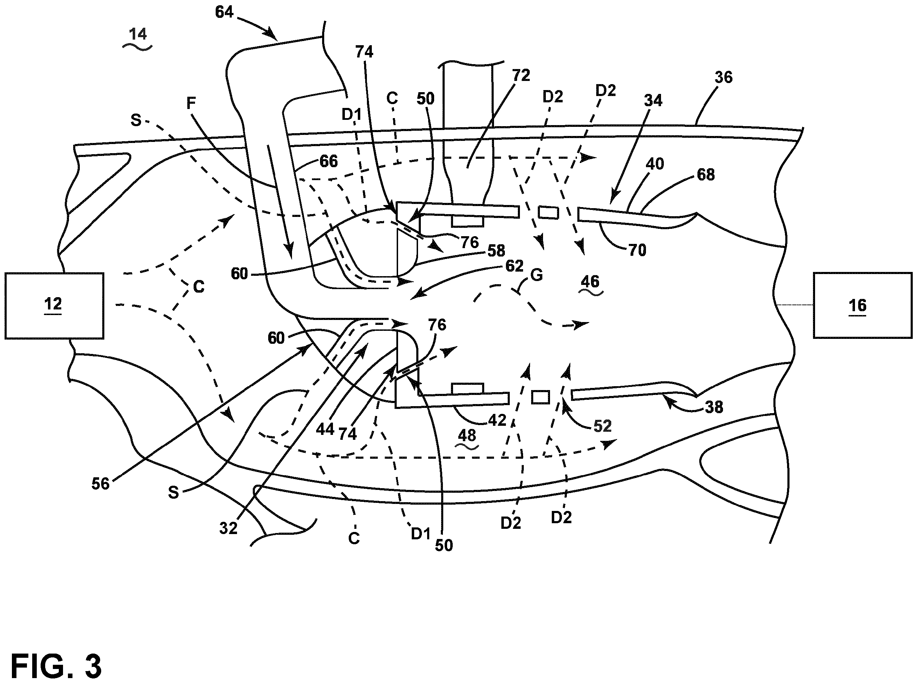

FIG. 3 depicts a cross-section view taken along line III-III of FIG. 2 illustrating the combustion section 14. At least one flame shaping passage can fluidly connect compressed air and the combustion chamber 46. By way of example, the at least one flame shaping passage is illustrated as first set of flame shaping holes 50 or second first set of flame shaping holes 52. The combustor 34 can include the first set of flame shaping holes 50, the second first set of flame shaping holes 52, or both the first set of flame shaping holes 50 and the second first set of flame shaping holes 52.

The first set of flame shaping holes 50 pass through the dome wall 44, fluidly coupling compressed air from the compression section 12 or the compressed air passageway 48 to the combustion chamber 46. The second first set of flame shaping holes 52 pass through the combustor liner 38, fluidly coupling compressed air from the compressed air passageway 48 to the combustion chamber 46.

Each fuel nozzle of the set of fuel nozzles 32 can be coupled to and disposed within a dome assembly 56. Each fuel nozzle of the set of fuel nozzles 32 can include a flare cone 58 and a swirler 60. The flare cone 58 includes an outlet 62 of the respective fuel nozzle of the set of fuel nozzles 32 fluidly coupled to the combustion chamber 46. Each fuel nozzle of the set of fuel nozzles 32 is fluidly coupled to a fuel inlet 64 via a passageway 66.

Both the inner combustor liner 42 and the outer combustor liner 40 have an outer surface 68 and an inner surface 70 at least partially defining the combustion chamber 46. The combustor liner 38 can be made of one continuous monolithic portion or be multiple monolithic portions assembled together to define the inner combustor liner 42 and the outer combustor liner 40. By way of non-limiting example, the outer surface 68 can define a first piece of the combustor liner 38 while the inner surface 70 can define a second piece of the combustor liner 38 that when assembled together form the combustor liner 38. As described herein, the combustor liner 38 includes the second first set of flame shaping holes 52. It is further contemplated that the combustor liner 38 can be any type of combustor liner 38, including but not limited to a single wall or a double walled liner or a tile liner. An ignitor 72 can be provided at the combustor liner 38 and fluidly coupled to the combustion chamber 46, at any location, by way of non-limiting example upstream of the second first set of flame shaping holes 52.

During operation, a compressed air (C) from a compressed air supply, such as the LP compressor 22 or the HP compressor 24 of FIG. 1, can flow from the compression section 12 to the combustor 34. A portion of the compressed air (C) can flow through the dome assembly 56. A first part of the compressed air (C) flowing through the dome assembly 56 can be fed to each fuel nozzle of the set of fuel nozzles 32 via the swirler 60 as a swirled airflow (S). A flow of fuel (F) is fed to each fuel nozzle of the set of fuel nozzles 32 via the fuel inlet 64 and the passageway 66. While only one fuel inlet 64 is shown, multiple fuel inlets 64 can be provided, and can provide the same or different fuels, fuel additives, air, water, liquid fuels, gaseous fuels, as well as multiple different fuels carried within the fuel inlet 64. The fuel can include any fuel suitable or use in the gas turbine engine 10 (FIG. 1), including liquid fuels, gaseous fuels, solid-state fuels, synthetic fuels, hydrocarbon fuel, hydrogen fuel, non-diluent hydrogen fuel, or a mixture of differing fuel types that may or may not include fuel additives, in non-limiting examples. The swirled airflow (S) and the flow of fuel (F) are mixed and fed to the combustion chamber 46 as a fuel/air mixture. The ignitor 72 can ignite the fuel/air mixture to create a flame within the combustion chamber 46, which generates a combustion gas (G). While shown as starting axially downstream of the outlet 62, it will be appreciated that the fuel/air mixture can be ignited at or near the outlet 62.

A second part of the compressed air (C) flowing through one or more portions of the dome assembly 56 can be fed to the first set of flame shaping holes 50 as a first flame shaping airflow (D1). That is, a portion of the compressed air (C) from the compression section 12 can flow through the dome wall 44 and into the combustion chamber 46 by passing through the first set of flame shaping holes 50. An inlet 74 is defined by a portion of one or more flame shaping holes of the first set of flame shaping holes 50. The inlet 74 is fluidly coupled to the compressed air (C). The first flame shaping airflow (D1) enters the one or more flame shaping holes of the first set of flame shaping holes 50 at the inlet 74 and exits the one or more flame shaping holes of the first set of flame shaping holes 50 at an outlet 76 located at the dome wall 44.

Another portion of the compressed air (C) can flow through the compressed air passageway 48 and can be fed to the second first set of flame shaping holes 52 as a second flame shaping airflow (D2). In other words, another portion of the compressed air (C) can flow axially past the dome assembly 56 and enter the combustion chamber 46 by passing through the second first set of flame shaping holes 52. That is, compressed air (C) can flow through the combustor liner 38 and into the combustion chamber 46 by passing through the second first set of flame shaping holes 52.

The first flame shaping airflow (D1) can be used to direct and shape the flame. The second flame shaping airflow (D2) can be used to direct the combustion gas (G). In other words, the first set of flame shaping holes 50 or the second first set of flame shaping holes 52 extending through the dome wall 44 or the combustor liner 38 direct air into the combustion chamber 46, where the directed air is used to control, shape, cool, or otherwise contribute to the combustion process in the combustion chamber 46.

The combustor 34 shown in FIG. 3 is well suited for the use of a hydrogencontaining gas as the fuel because it helps contain the faster moving flame front associated with hydrogen fuel, as compared to traditional hydrocarbon fuels. However, the combustor 34 can be used with traditional hydrocarbon fuels.

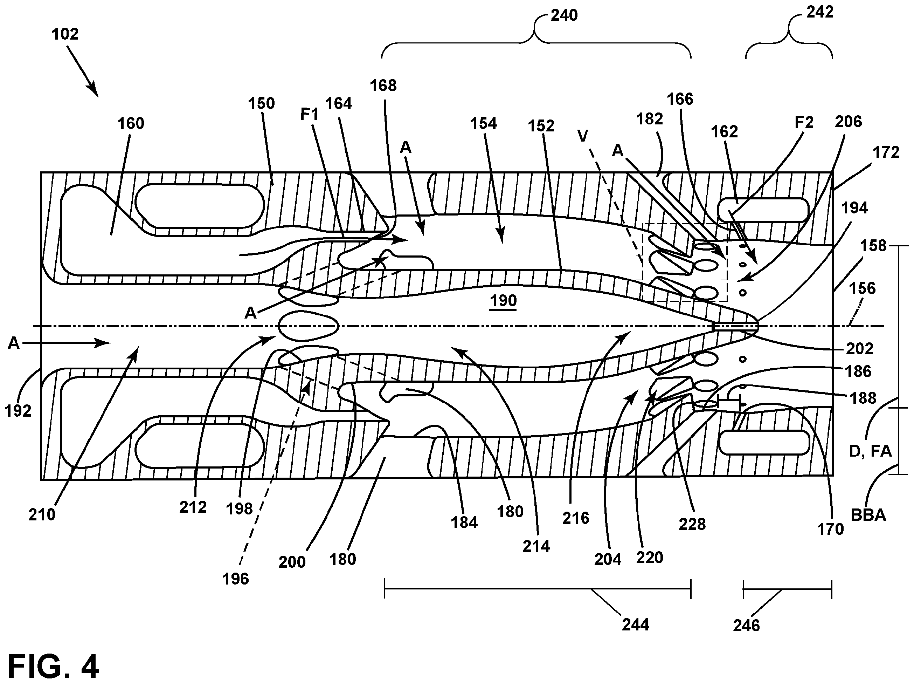

FIG. 4 shows a sectional view of a fuel injector 102 suitable for use within the fuel nozzle assemblies 32 of FIG. 2. The fuel injector 102 includes an outer wall 150 spaced from a centerbody 152, defining a mixing passage 154 therebetween, and exhausting at an injector outlet 158. The fuel injector 102 can define a fuel injector axis 156, and the outer wall 150, centerbody 152, and mixing passage 154 can be in annular arrangement about the fuel injector axis 156. The injector outlet 158 can be circular defining an outlet diameter (D) and can be positioned interior of an aft face 172 of the outer wall 150. In one example, the fuel injector axis 156 can be collinear with a longitudinal axis for the centerbody 152, the outer wall 150, or both.

A first fuel supply 160 and a second fuel supply 162 are provided in the outer wall 150, with the second fuel supply 162 arranged aft of the first fuel supply 160 relative to a flow direction through the fuel injector 102. A first fuel passage 164 can fluidly couple the first fuel supply 160 to the mixing passage 154 and a second fuel passage 166 can fluidly couple the second fuel supply 162 to the mixing passage 154. The first fuel passage 164 terminates at a first fuel outlet 168 at the mixing passage 154 and the second fuel passage 166 terminates at a second fuel outlet 170 at the mixing passage 154. In a non-limiting example, the mixing passage 154 can be defined extending between the first fuel outlet 168 and the injector outlet 158. The first fuel passage 164 and the second fuel passage 166 can be arranged perpendicular to the outer wall 150 or can be arranged offset from perpendicular. In a non-limiting example, the first fuel supply 160 can supply a liquid fuel and the first fuel passage 164 can be a liquid fuel passage, such as for providing liquefied petroleum, oil fuels, or atomized liquid fuels in non-limiting examples. The second fuel passage 166 can be a gaseous fuel passage and the second fuel supply 162 can supply a gaseous fuel, such as hydrogen, non-diluent hydrogen, or hydrogen fuels. In another non-limiting example, the first fuel supply 160 can supply a denser fuel, having a greater density than that of a fuel supplied from the second fuel supply 162. For example, a liquid fuel can include a greater density than that of a gaseous fuel.

A first air passage 180 and a second air passage 182 are provided in the outer wall 150, with the second air passage 182 arranged aft of the first air passage 180. The first air passage 180 can be positioned aft of the first fuel supply 160, while permitting impingement of a fuel exhausting from the first fuel passage 164 upon an airflow exhausting from the first air passage 180 within the mixing passage 154. The second air passage 182 can be positioned forward of the second fuel supply 162, being spaced therefrom by a gap 188.

The first and second fuel supplies 160, 162 and first and second air passages 180, 182 can be arranged perpendicular to the fuel injector axis 156 by way of non-limiting example, while non-perpendicular arrangements are contemplated. That is, one or more of the first and second fuel supplies 160, 162 and the first and the second air passages 180, 182 can introduce a flow perpendicular to the fuel injector axis 156, or at an angle offset from perpendicular. The orientation among the first and second fuel supplies 160, 162 and the first and second air passages 180, 182 can be the same or dissimilar within the fuel injector 102. In a non-limiting example, such an offset can include a tangential component to provide a swirling flow within the mixing passage 154. For example, one or more of the first and second fuel passages 164, 166 and the first and second air passages 180, 182 can be oriented as offset from parallel and perpendicular to the fuel injector axis 156 to impart a directionality or swirl to a flow of fluid within the mixing passage 154. In another non-limiting example, the second fuel supply 162 can be offset from perpendicular to the fuel injector axis 156 at an angle extending toward a forward end 192 or an aft end 194 of the centerbody 152, where such an angle can be greater than or equal to negative seventy degrees (-70°) and less than or equal to seventy degrees (70°), where a negative angle represents an orientation toward the forward end 192 and a positive angle represents an orientation toward the aft end 194. In another non-limiting example, such an orientation can be greater than negative seventy degrees (-70°) and less than zero degrees (0°), or greater than zero degrees (0°) and less than seventy degrees (70°). In another non-limiting example, the angle can be non-zero relative to extending perpendicular from the fuel injector axis 156. In yet another non-limiting example, such an offset orientation can be relative to a flow streamline at the second fuel outlet 170 or can be relative to a longitudinal axis or flow streamline defined along the second air passage 182.

Furthermore, it should be appreciated that one or more of the first and second fuels supplies 160, 162 and the first and second air passages 180, 182, can be arranged as a set of multiple discrete passages in annular arrangement about the fuel injector axis 156.

The centerbody 152 can be hollow defining an interior 190 and extending between the forward end 192 and the aft end 194. A first centerbody passage 196, illustrated in broken line, extends through the centerbody 152 between an inlet 198 at the interior 190 and an outlet 200 at the mixing passage 154. The outlet 200 can be positioned forward of a first air outlet 184 relative to a direction extending perpendicular to the fuel injector axis 156. In a non-limiting example, the first centerbody passage 196 can be provided as a set of passages in annular arrangement about the centerbody 152. A second centerbody passage 202 can be positioned at the aft end 194 and can be aligned with and intersecting the fuel injector axis 156. In an alternative non-limiting example, it is contemplated that the fuel injector 102 does not include a centerbody, and that the mixing passage 154 occupies the area that would contain the centerbody 152. In additional non-limiting examples, the centerbody 152 can be blunt, such as having an aft end 194 that is rounded or flat, or can be sharp, such as having an aft end 194 that is pointed.

The interior 190 of the centerbody 152 includes, in serial arrangement, a constant cross-sectional area portion 210, a first converging portion 212, and a diverging portion 214. A second converging portion 216 extends from the diverging portion 214 and terminates at the aft end 194 at the second centerbody passage 202. It is contemplated that additional portions can be included, such as between the first converging portion 212 and the diverging portion 214, or between the diverging portion 214 and the second converging portion 216. Such portions can be converging, diverging, or can have a constant cross-sectional area. While the first and second converging portions 212, 216 and the diverging portion 214 are curved or arcuate, indicating a varying rate of change in cross-sectional area, additional geometries are contemplated, such as those showing a constant rate of change in cross-sectional area. Additionally, while inflection points can be defined between adjacent portions among the first converging portion 212, the diverging portion 214, and the second converging portion 216, additional transitions are contemplated. The inlet 198 for the first centerbody passage 196 can be arranged within the first converging portion 212, while any arrangement along the centerbody 152 is contemplated.

In a non-limiting example, a cross-sectional area for the outer wall 150 and the centerbody 152 can define a bluff body area for the fuel injector 102 defined perpendicular to the fuel injector axis 156. Similarly, a cross-sectional area for the flow area for the fuel injector 102 can be defined as the cross-sectional area of the mixing passage 154 and the interior 190 of the centerbody 152, as well as among any additional passages such as the first or second fuel supplies 160, 162, the first or second fuel passages 164, 166, the first or second air passages 180, 182, or the second centerbody passage 202. A flow area (FA) can be defined as the cross-sectional area for the mixing passage 154 at the injector outlet 158 defined in a direction perpendicular to the fuel injector axis 156. A bluff body area (BBA) can be defined as the area of solid material for the outer wall 150 along the aft face 172. In a non-limiting example, a ratio of the flow area to the bluff body area can be greater than or equal to 0.01 and less than or equal to 10.

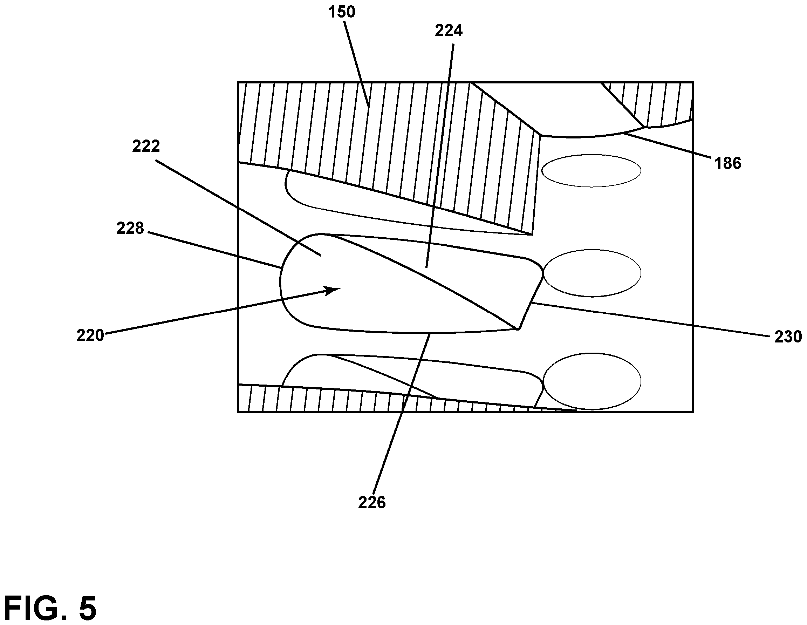

A set of turbulators 220 are provided on or formed as part of the outer wall 150 in annular arrangement and extend into the mixing passage 154. Referring briefly to FIG. 5, showing an enlarged view of the area V of FIG. 4, the set of turbulators 220 can include a ramped geometry, including a ramp wall 222 extending between a first side wall 224 and a second side wall 226. A forward edge 228 is defined where the ramp wall 222 begins along the outer wall 150. The forward edge 228 is defined where the first side wall 224 meets the second side wall 226, with an aft edge 230 returning from the ramp wall 222 to the outer wall 150. The set of turbulators 220 terminates at a second air outlet 186, such that the forward edge 228 terminates at the second air outlet 186.

Still referring to FIG. 4, the mixing passage 154 can further include a decreasing cross-sectional area portion 204. A distance between the outer wall 150 and the centerbody 152 can remain constant within the decreasing cross-sectional area portion 204, while decreasing distances from the fuel injector axis 156 define a decreasing cross-sectional area for the mixing passage 154 within the decreasing cross-sectional area portion 204. The decreasing cross-sectional area portion 204 can terminate at the set of turbulators 220 and can accelerate a flow through the mixing passage 154 toward the set of turbulators 220. An increasing cross-sectional area portion 206 can be provided aft of the set of turbulators 220 along the centerbody. In a non-limiting example, it is contemplated that a second decreasing cross-sectional area portion can extend between the increasing cross-sectional area portion 206 and the injector outlet 158. In a non-limiting example, it is contemplated that the increasing cross-sectional area portion 206 is a decreasing cross-sectional area portion, with no increasing cross section positioned at or aft of the set of turbulators. More specifically, the diameter of the centerbody 152 can decrease within the increasing cross-sectional area portion 206, while the diameter of the outer wall 150 can remain constant, decreases at a rate lesser than that of the centerbody 152, or increases, thereby defining an increasing cross-sectional area for the increasing cross-sectional area portion 206.

In alternative non-limiting examples, it is contemplated that the second air outlet 186 is positioned on the set of turbulators 220, with the second air outlet 186 positioned on one of the ramp wall 222, the first or second side walls 224, 226, the forward edge 228, or extending among combinations thereof. In another non-limiting example, the second air outlet 186 can be arranged aft and spaced from the set of turbulators 220 and the forward edge 228. In yet another non-limiting example, it is contemplated that the second fuel outlet 170 and the second air passage 182 can be positioned forward of the set of turbulators 220. In such an example, the set of turbulators 220 can be arranged at the injector outlet 158 or spaced therefrom. In yet another non-limiting example, it is contemplated that the second fuel outlet 170 is positioned on or forward of the set of turbulators 220. Furthermore, any shape for the turbulators is contemplated, including but not limited to vortex turbulators, wedge-type turbulators, pin-type turbulators, ramp-type turbulators, single sided or double sided turbulators, splitter plate-type turbulators, dome-type turbulators, plough-type turbulators, scoop-type turbulators, vane-type turbulators, Wheeler-type turbulators, Kuethe or wave-element type turbulators, delta wing or delta-winglet turbulators, rectangular turbulators, square turbulators, conic turbulators, cylindrical or rod-type turbulators, rounded, spherical, or circular turbulators, vortex generators, or turbulators generating flows such as vortices, reverse vortices, transverse vortices, hairpin vortices, laminar flows, turbulent flows, helical flows, stream-wise flows, cross-stream flows, co-rotating flows, or counter-rotating flows, or any combination thereof. Additionally, any size, number, orientation, or arrangement of turbulators is contemplated.

The mixing passage 154 can be separated into a first mixing region 240 having a first length 244 and a second mixing region 242 having a second length 246, with the first and second lengths 244, 246 being defined in a direction along the fuel injector axis 156. In a non-limiting example, the first length 244 can be longer than the second length 246. A total mixing length for the mixing passage 154 can be defined as the summation of the first length 244 and the second length 246. The first mixing region 240 can extend between a forward end of the first air outlet 184 and the aft end of the set of turbulators 220, for example, and the second mixing region 242 can extend between the forward end of the second fuel outlet 170 and the injector outlet 158. In an alternate, non-limiting example, the second mixing region 242 can extend from the set of turbulators 220 to the injector outlet 158 or extend from the first mixing region 240 to the injector outlet 158. In another non-limiting example, the first mixing region 240 can meet or terminate at the second mixing region 242. In yet another non-limiting example, the set of turbulators 220 can be arranged within the first mixing region 240. A ratio of the total mixing length to a diameter (D) of the injector outlet 158 can be greater than or equal to zero and less than or equal to 200 in a non-limiting example.

In operation, a supply of air (A) can be provided to the interior 190 of the centerbody 152 through the forward end 192, while other fluids are contemplated, such as water, steam, or fuel in non-limiting examples. In one non-limiting example, the supply of air (A) provided can be a supply of purge air. The supply of air (A) can further be provided from the first air passage 180 and the second air passage 182. A first fuel (F1) can be provided from the first fuel supply 160 and a second fuel (F2) can be provided from the second fuel supply 162. The first fuel (F1), the supply of air (A) from the first air passage 180 and the supply of air (A) from the first centerbody passage 196 can intersect or intermix within the first mixing region 240, intermixing the air and the fuel. In a non-limiting example, the first fuel (F1) can be a liquid fuel, such as an oil-based fuel that is atomized and intermixed with the supply of air (A) within the first mixing region 240 to form a mixture thereof. The mixture of the first fuel (F1) and the supply of air (A) is turbulated by the set of turbulators 220, further mixing the first fuel (F1) and the supply of air (A), as well as turbulating the mixture prior to entry into the second mixing region 242 from the first mixing region 240. After turbulation at the set of turbulators 220, the mixture of the first fuel (F1) and the supply of air (A) is further intermixed with the supply of air (A) from the second air passage 182, and then further intermixed with the second fuel (F2) within the second mixing region 242. In a non-limiting example, the second fuel (F2) can be a gaseous fuel, such as a hydrogen fuel or non-diluent hydrogen fuel. The mixture of the first fuel (F1) and the supply of air (A) then mixes with the supply of air (A) from the second air passage 182 and the second fuel (F2) from the second fuel supply 162 to form a mixture of the supplies of air (A), the first fuel (F1), and the second fuel (F2), which mixes within the second mixing region 242 and then exhausts from the injector outlet 158 for combustion. Furthermore, an additional volume of the supply of air (A) can be provided through the second centerbody passage 202, providing the supply of air (A) from the centerbody 152 to the second mixing region 242, bypassing the first mixing region 240.

A relatively greater mixing length is required to intermix liquid fuels, or relatively denser fuels, with air, as compared with that of gaseous fuels or fuels with a relatively lesser density. Mixing times for gaseous fuels, such as hydrogen fuels or non-diluent hydrogen are faster than that of mixing times for liquid or atomized liquid fuels. Therefore, a relatively longer mixing length is required to suitably intermix the liquid fuels as compared to a relatively shorter mixing length required to suitably intermix the gaseous fuels. The first mixing region 240 provides for mixing of air and liquid fuel as the first fuel (F1) and has a relatively longer mixing length than the second mixing region 242 defined along the fuel injector axis 156. The second mixing region 242, being relatively shorter than the first mixing region 240, provides for mixing gaseous fuel as the second fuel (F2) with the mixture of the supply of air (A) and the first fuel (F1), as well as with a supply of air (A) provided from the second air passage 182. The second mixing region 242 can be relatively shorter in length than that of the first mixing region 240 as intermixing of the gaseous fuel of the second fuel (F2) happens faster than that of liquid fuel of the first fuel (F1), thereby requiring the lesser mixing length for the second mixing region 242. In a non-limiting example, the second mixing region 242 can be less than or equal to 70% of the first mixing region 240. In another non-limiting example, the second mixing length can be greater than or equal to 0% and less than or equal to 70% of the first mixing region 240, where 0% represents where providing the second fuel (F2) is at the aft face 172. Additionally, the mixture from the first mixing region 240 can further intermix within the second mixing region 242, prior to exhausting at the injector outlet 158. As can be appreciated, the fuel injector 102 permits intermixing of up to 100% of liquid fuels, such as carbon-based fuels, with up to 100% gaseous, hydrogen fuels, or non-diluent hydrogen fuels, permitting blending of the fuels within the fuel injector 102, while utilizing 0% liquid fuels or 0% gaseous fuel is possible within the fuel injector 102, while any percentage between 0-100% is contemplated among the liquid and gaseous fuels or among the first fuel supply 160 and the second fuel supply 162.

A ratio of the supply of fuel to air can be greater than or equal to 0.005 and less than or equal to 0.060. In a non-limiting example, a ratio of the supply of fuel for the first fuel (F1) and the second fuel (F2) among the first fuel supply 160 and the second fuel supply 162 to the supply of air (A) among the first air passage 180 and the second air passage 182 can be greater than or equal to 0.005 and less than or equal to 0.060. In another non-limiting example, the ratio of the supply of fuel to the supply of air (A) among all of the first and second fuel supplies 160, 162, the first and second air passages 180, 182, and the first centerbody passage 196 and the second centerbody passage 202, or combinations thereof, can be greater than or equal to 0.005 and less than or equal to 0.060. It is further contemplated that these values can relate to liquid fuels, gaseous, fuels, or a combination of liquid and gaseous fuels. In a non-limiting example, the first fuel (F1) can be a liquid fuel or atomized liquid fuel and the second fuel (F2) can be a gaseous fuel. In another non-limiting example, a ratio for fuel to air can be greater than or equal to 0.01 and less than or equal to 0.04, such as for natural gas and hydrogen.

Flashback can occur when combustion of the fuels or fuel mixtures occurs faster than provision of the fuels from a fuel injector, such as when the velocity of the provision of the mixture is slower than the flame speed of the combusted mixture. The flame speed is at its highest at a stoichiometric mixture or in high-turbulence regions. As such, local regions having poor intermixing can result in local increase in flame speed, which can result in unintended flashback. Such flashback can reduce component lifetime or increase required maintenance. Ensuring proper intermixing of the fuels can reduce or eliminate the occurrence of flashback and flame holding, as proper intermixing can determine combustion speeds of the mixtures at a suitable rate to reduce or prevent flashback or flame holding at particular fuel flow rates and pressures. The fuel injector 102 as described herein provides suitable mixing lengths to incorporate both liquid and gaseous fuels, providing fuel injection capable of utilizing multiple different types of fuels while ensuring proper intermixing for each fuel. Such proper intermixing reduces flashback and can increase component lifetime and reduce maintenance.

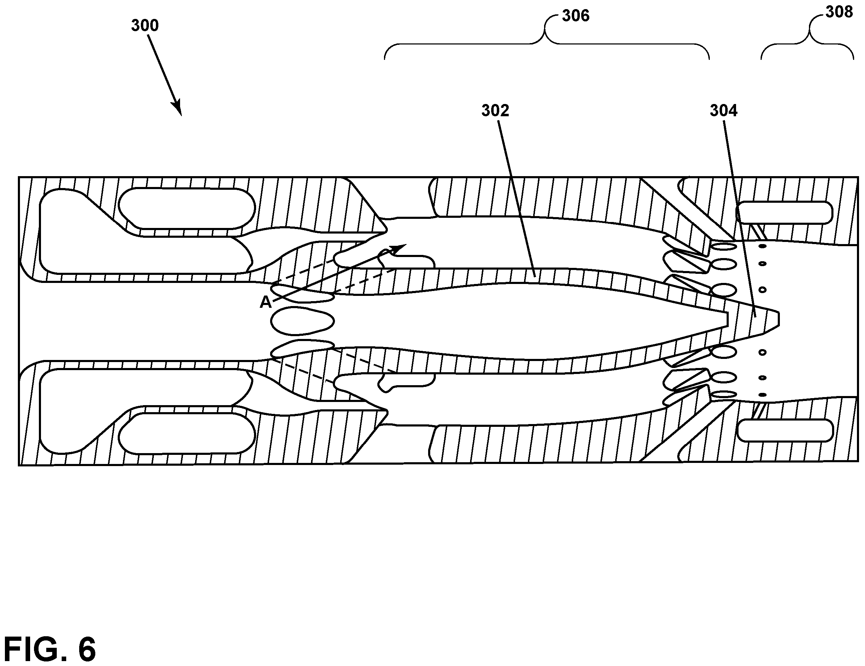

Referring to FIG. 6, a sectional view of a fuel injector 300 is provided that can be used within the combustor 30 of FIG. 2, for example. The fuel injector 300 can be substantially similar to the fuel injector 102 of FIG. 4, and the discussion will be limited to differences between the two. Specifically, the fuel injector 300 includes a centerbody 302 with a closed aft end 304, as compared to that of FIG. 4 that includes the second centerbody passage 202 at the aft end 194 of the centerbody 152. Therefore, a supply of air (A) can be provided from the centerbody 302 to a first mixing region 306 while being isolated from directly coupling to a second mixing region 308.

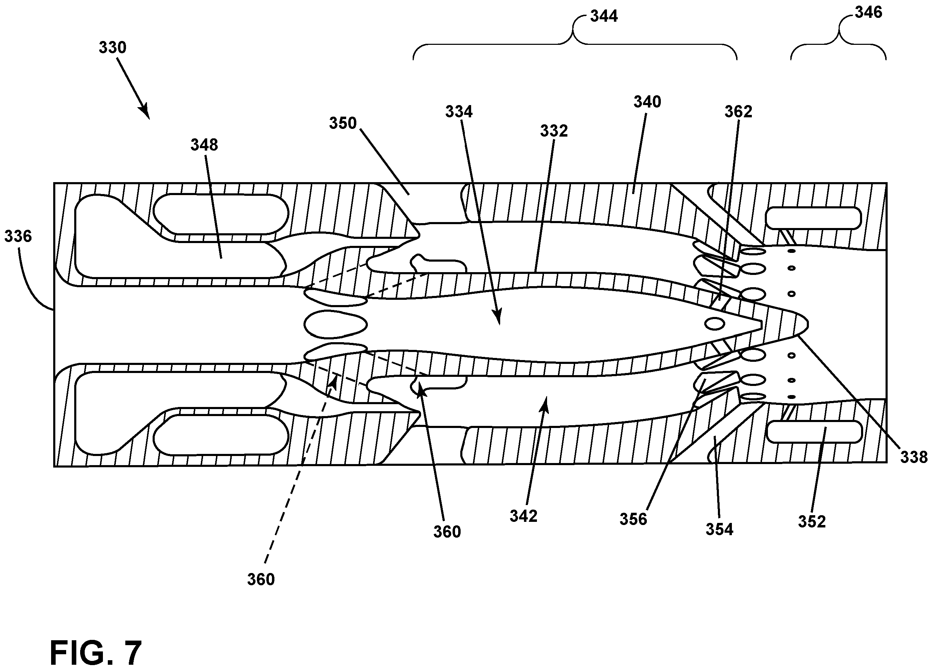

Referring to FIG. 7, a sectional view of a fuel injector 330 is provided that can be used within the combustor 30 of FIG. 2, for example. The fuel injector 330 includes a centerbody 332 that includes an interior 334 and extends between a forward end 336 and an aft end 338. The centerbody 332 is positioned within and spaced from an outer wall 340, defining a mixing passage 342 therebetween, which can be separated into a first mixing region 344 and a second mixing region 346, similar to that of FIG. 4. A first fuel supply 348 and a first air passage 350 can exhaust to the first mixing region 344 and a second fuel supply 352 and a second air passage 354 can exhaust to the second mixing region 346. The first and second fuel supplies 348, 352 and the first and second air passages 350, 354 can be arranged as a set of multiple passages in annular arrangement about the fuel injector 330. A set of turbulators 356 are provided on the outer wall 340, extending into the mixing passage 342 within the first mixing region 344.

The centerbody 332 includes a first centerbody passage 360 and a second centerbody passage 362, each of which can be arranged as a set of passages in annular arrangement about the centerbody 332. The first centerbody passage 360 can be similar to that of the first centerbody passages 196 of FIG. 4, in a non-limiting example. The second centerbody passage 362 can have an angled orientation or tangential component such that a fluid exhausting from the second centerbody passage 362 includes a helical component or is swirled. In a non-limiting example, the second centerbody passage 362 can be cylindrical, or having a circular cross-sectional shape, while additional shapes are contemplated, including but not limited to circular, elliptical, oval, racetrack, rounded, curved, linear, curvilinear, rectilinear, or combinations thereof. Additionally, it is contemplated that the second centerbody passage 362 can be formed as a slot, being elongated in at least one direction, or can be formed as a plurality of slots arranged about the centerbody 332, such as in serial or annular arrangement in non-limiting examples.

The second centerbody passage 362 can be aligned with or can be proximate the set of turbulators 356, for example, exhausting at or impinging upon the set of turbulators 356. It is contemplated that the second centerbody passage 362 can align with or be proximate the set of turbulators 356, as shown, or can be offset from the set of turbulators 356, such as axially or circumferentially offset. In additional non-limiting examples, the second centerbody passage 362 can be arranged forward or aft of the set of turbulators 356, or at any position along the centerbody 332. Furthermore, it is contemplated that the second centerbody passage 362 aligns with any of the other passages, such as the first or second fuel supplies 348, 352 or the first or second air passages 350, 354. Further still, additional sets of passages arranged within the centerbody 332 are contemplated, having any alignment or arrangement. Such alignment or arrangement can further be with respect to another set of passages, such as having alignment or unalignment, similar or dissimilar angle or orientation, or a common number or pattern thereof.

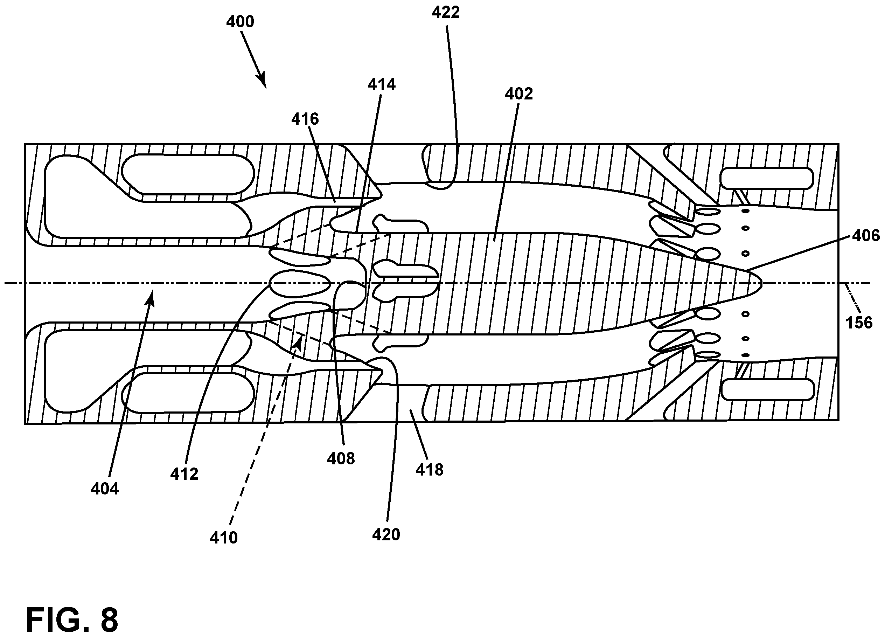

Referring to FIG. 8, a fuel injector 400 is shown that can be substantially similar to the fuel injector 102 of FIG. 4, and the discussion will be limited to the differences between the two. Specifically, the fuel injector 400 includes a centerbody 402 that includes an interior 404 that terminates at an aft wall 408 forward of an aft end 406 of the centerbody 402. The centerbody 402 includes a centerbody passage 410 that extends from an inlet 412 arranged forward of the aft wall 408 to an outlet 414. In a non-limiting example, the aft wall 408 can be radially aligned with a fuel outlet 420 for a first fuel passage 416 or an air outlet 422 for a first air passage 418, or both, relative to an injector axis 424, while any position or arrangement of the aft wall 408 defining the interior 404 is contemplated.

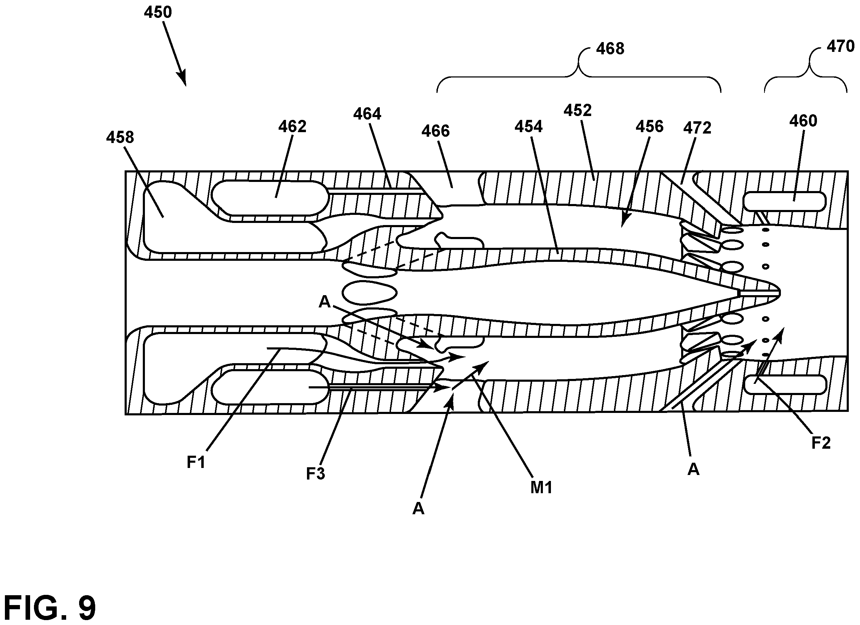

Referring to FIG. 9, a fuel injector 450 is shown that can be substantially similar to the fuel injector 102 of FIG. 4, and the discussion will be limited to the differences between the two. Specifically, the fuel injector 450 includes an outer wall 452 spaced from a centerbody 454 defining a mixing passage 456 therebetween. The mixing passage 456 includes a first mixing region 468 and a second mixing region 470 in serial arrangement. A first fuel supply 458 supplies a first fuel (F1) to the mixing passage 456. A third fuel supply 462 is arranged in the outer wall 452. The third fuel supply 462 includes a third fuel passage 464. The third fuel passage 464 exhausts to a first air passage 466, while it is contemplated that the third fuel passage 464 exhausts to the mixing passage 456. The third fuel supply 462 can provide a third fuel (F3) that injects into a supply of air (A) within the first air passage 466 prior to the mixing passage 456 and can intermix within the first air passage 466 to define a first mixture (M1) of the third fuel (F3) and the supply of air (A). The first mixture (M1) can exhaust to the mixing passage 456 to intermix with the first fuel (F1).

In operation, the third fuel supply 462 permits the introduction of the third fuel (F3) within the first mixing region 468 via introduction into the first air passage 466. The third fuel (F3) can be a liquid fuel, liquid fuel additive, or water in non-limiting examples. The third fuel (F3) permits supplying of a different liquid fuel or additive into the first mixing region 468 different than that of the first fuel (F1). The third fuel (F3) is supplied to the first air passage 466 prior to entry into the first mixing region 468, permitting mixing of the third fuel (F3) and the supply of air (A) prior to entry into the mixing passage 456 to mix with the first fuel (F1). Subsequently, when the first mixture (M1) intersects with the first fuel (F1) within the first mixing region 468, the third fuel (F3) intermixes with both the supply of air (A) and the first fuel (F1) within the first mixing region 468, permitting the addition of another or different liquid fuel or fuel additive within the first mixing region 468. The mixture can then be further mixed within the second mixing region 470, where the introduction of a second fuel (F2) from a second fuel supply 460 or a supply of air (A) from a second air passage 472 can be added to the mixture, such as gaseous fuels which can utilize the relatively shorter second mixing region 470. It is further contemplated that a gaseous fuel or gaseous additive can be provided from the third fuel supply 462.

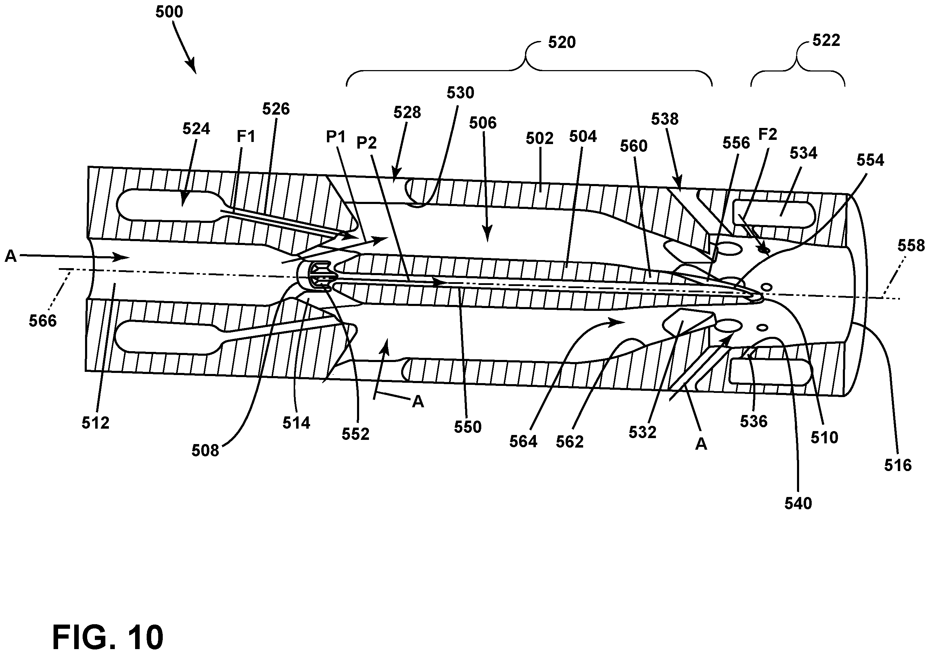

Referring to FIG. 10, a sectional view illustrates a fuel injector 500 including an outer wall 502 spaced from a centerbody 504 by a mixing passage 506. The centerbody 504 extends between a forward end 508 and an aft end 510. A forward passage 512, such as an air passage, is bounded by the outer wall 502 forward of the centerbody 504. A first centerbody passage 514 fluidly couples the forward passage 512 to the mixing passage 506 through the centerbody 504 at the forward end 508. The mixing passage 506 exhausts at an injector outlet 516.

The mixing passage 506 can be separated into a first mixing region 520 and a second mixing region 522 in serial arrangement. A first fuel supply 524 supplies a first fuel (F1) to the first mixing region 520 through a first fuel passage 526 and a first air passage 528 supplies a supply of air (A) to the first mixing region 520 at a first air outlet 530. In one example, the first fuel (F1) can be a liquid fuel that can be atomized for introduction into the first mixing region 520. A set of turbulators 532 can be positioned where the first mixing region 520 meets the second mixing region 522. The first mixing region 520 can extend between a forward end of the first air outlet 530 and an aft end of the set of turbulators 532 and the second mixing region 522 can extend between the forward end of a second fuel passage outlet 540 and the injector outlet 516. A second fuel supply 534 supplies a second fuel (F2) to the second mixing region 522 through a second fuel passage 536 and a second air passage 538 supplies a supply of air (A) to the second mixing region 522.

A longitudinal centerbody passage 550 extends through the centerbody 504 and can define a longitudinal axis 558, which can be collinear with a fuel injector axis 566 in a non-limiting example. A centerbody inlet passage 552 fluidly couples the longitudinal centerbody passage 550 to the forward passage 512 at the first centerbody passage 514. The longitudinal centerbody passage 550 terminates at an outlet 554 at the aft end 510. The aft end 510 can be formed as an angled surface 556, with the outlet 554 provided on the angled surface 556. The angled surface 556 can be arranged at an angle relative to the longitudinal axis 558 in a non-limiting example. The aft end 510 can align with the second fuel passage 536, for example, while the angled surface 556 can begin aligned with or proximate to the set of turbulators 532 and terminate at the aft end 510.

The centerbody 504 can include a decreasing cross-sectional area 560 that can align with a converging wall 562 for the outer wall 502. The converging wall 562 can define a decreasing cross-sectional area for the first mixing region 520. In a non-limiting example, the converging wall 562 can converge at a rate greater than that of the decreasing cross-sectional area 560 for the centerbody 504 defining an acceleration area 564 for the mixing passage 506 along the converging wall 562 and the decreasing cross-sectional area 560. The cross-sectional area for the mixing passage 506 within the acceleration area 564 can accelerate a mixture of the first fuel (F1) and the supply of air (A) from the first fuel supply 524 and the first air passage 528 prior to entry into the second mixing region 522. Such an acceleration can provide for a greater flow speed for a mixture exhausting from the fuel injector 500, which can reduce the occurrence of flashback or flame holding at the fuel injector 500.

In operation, a volume of fluid or gas, such as a supply of air (A), can be provided to the forward passage 512 forward of the centerbody 504. A first portion (P1) of the supply of air (A) passes to the mixing passage 506 through the first centerbody passage 514, while a second portion (P2) passes to the longitudinal centerbody passage 550 through the centerbody inlet passage 552. The portion of the supply of air (A) within the longitudinal centerbody passage 550 can then exhaust from the centerbody 504 at the outlet 554 within the second mixing region 522, bypassing the first mixing region 520. In this way, a portion of the supply of air (A) within the forward passage 512 can pass directly to either or both of the first mixing region 520 and the second mixing region 522. The geometries, such as cross-sectional area, of the first centerbody passage 514 and the centerbody inlet passage 552, can be defined by the local flow rates provided to the first mixing region 520, the second mixing region 522, or the longitudinal centerbody passage 550.

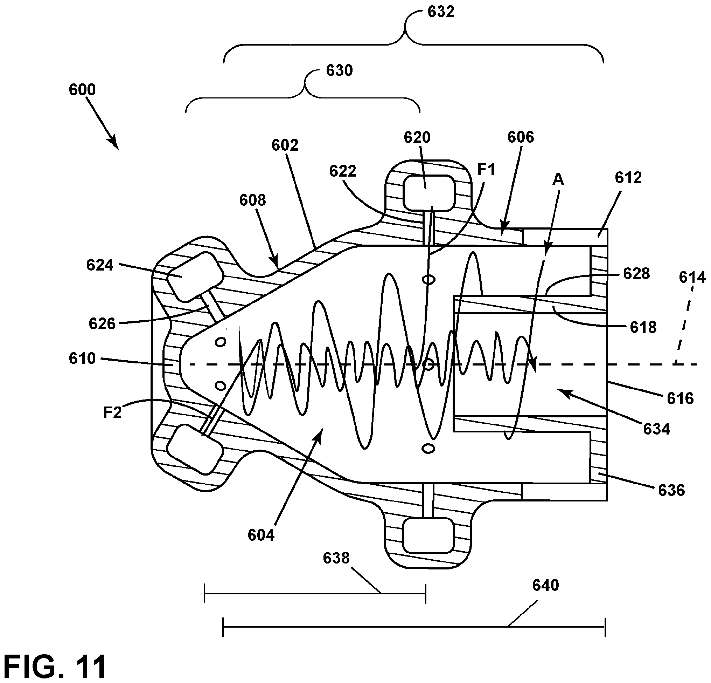

FIG. 11 is a cross-sectional view of a fuel injector 600 including an outer wall 602 defining a mixing passage 604. The outer wall 602 can be annular and includes a first portion 606 having a cylindrical shape, and a second portion 608 having at least a portion of a conic shape, such as a frustoconical shape, with a decreasing cross-sectional area extending in a direction toward a forward end 610. An air passage 612, which can be provided as a set of air passages in annular arrangement about the outer wall 602, provides a supply of air (A) through the first portion 606. The air passage 612 can be oriented at an angle relative to the outer wall 602 such that air entering the mixing passage 604 through the air passage 612 rotates within the mixing passage 604 about the cylindrically shaped outer wall 602 of the first portion 606. That is, the air passage 612 can be arranged tangentially to the outer wall 602 within the first portion 606, or slightly offset from tangential to induce rotation or swirl to the supply of air (A). Furthermore, the air passage 612 can be angled toward the second portion 608, such that the supply of air (A) entering the air passage 612 swirls about the cylindrical shape of the first portion 606 in a helical manner, moving toward the second portion 608 from the first portion 606.

A fuel injector axis 614 can be defined extending between the forward end 610 and an outlet 616 for the fuel injector 600. The outlet 616 can be defined within an end wall 636 connecting the outer wall 602 to a centerbody 618. The centerbody 618 is positioned within the outer wall 602 of the first portion 606. An exterior surface 628 of the centerbody 618 can be cylindrical to facilitate helical movement of the supply of air (A) from the air passage 612 about the centerbody 618, while maintaining a minimum radial width from the fuel injector axis 614. The centerbody 618 surrounds a centerbody passage 634 that exhausts at the outlet 616.

A first fuel supply 620 with a first fuel passage 622 extends through the outer wall 602 within the first portion 606 to provide a first fuel (F1) to the mixing passage 604. The first fuel supply 620 can have an annular arrangement, and the first fuel passage 622 can be provided as a set of first fuel passages in annular arrangement about the fuel injector axis 614. Similar to that of the air passage 612, the first fuel passage 622 can be arranged tangentially in order to supply a first fuel (F1) in a helical manner, as well as having an angled orientation to supply the first fuel (F1) toward the second portion 608. Furthermore, while the first fuel passage 622 is shown as arranged perpendicular to the outer wall 602 at the first portion 606, an angled orientation in any direction is also contemplated. In a non-limiting example, an angled orientation for the first fuel passage 622 can be less than or equal to sixty degrees (60°). In a non-limiting example, the first fuel supply 620 can be a liquid fuel supply or an atomized liquid fuel supply that is introduced into the supply of air (A) moving within the mixing passage 604 provided from the air passage 612.

A second fuel supply 624 with a second fuel passage 626 extends through the outer wall 602 within the second portion 608 to provide a second fuel (F2) to the mixing passage 604. The second fuel supply 624 can have an annular arrangement about the fuel injector 600 and the second fuel passage 626 can be arranged as a set of second fuel passages in annular arrangement about the fuel injector axis 614. The second fuel passage 626 can be arranged tangentially to supply the second fuel (F2) in a helical manner similar to that of the first fuel supply 620. While the second fuel passage 626 is shown as arranged perpendicular to the outer wall 602 at the second portion 608, an angled orientation in any direction is contemplated. In a non-limiting example, the second fuel supply 624 can be a gaseous fuel supply introduced into the mixing passage 604 aft of the first fuel supply 620.

A first mixing region 630 having a first length 638 can be defined within the mixing passage 604 extending from the first fuel supply 620 within the first portion 606 to the second fuel supply 624 within the second portion 608, in a direction toward the forward end 610. When the first fuel (F1) is introduced through the first fuel supply 620 it mixes with the supply of air (A) provided by the air passage 612 within the first mixing region 630 as both the supply of air (A) and the first fuel (F1) swirl helically within the mixing passage 604 defined by the first portion 606. The angle of injection and helical movement of the first fuel (F1) and the supply of air (A) intermixes the two within the mixing passage 604. In a non-limiting example, the first fuel (F1) can be a liquid or atomized liquid fuel that intermixes with the supply of air (A) within the first mixing region 630.

A second mixing region 632 having a second length 640 can be defined within the mixing passage 604 extending from the first mixing region 630 to the outlet 616. The second mixing region 632 can overlap with the first mixing region 630 in a direction defined perpendicular to the fuel injector axis 614. In an alternate example, it is contemplated that the second mixing region 632 can extend at least partially in the forward direction toward the forward end 610 before turning in the opposite direction and extending to the outlet 616. When the second fuel (F2) is introduced through the second fuel supply 624 it mixes with the mixture of the first fuel (F1) and the supply of air (A) from the first mixing region 630, thereby intermixing the supply of air (A), the first fuel (F1), and the second fuel (F2) in the second mixing region 632.

In operation, the supply of air (A) can be provided to the mixing passage 604 through the air passage 612, swirling within the mixing passage 604 as a cylindrical body of helical air, and can be limited to a minimum diameter by the centerbody 618. The helical body of the supply of air (A) moves toward the first fuel supply 620, either by angled injection from the air passage 612, or by excess supply volume of the supply of air (A) pushing the volume within the mixing passage 604 toward the outlet 616, or both. When the helical body of air moves toward the first fuel supply 620, the first fuel (F1) is introduced into the helical body of air from the supply of air (A). Such an introduction can be perpendicular to the outer wall 602, in a helical manner, or in an angled manner, where the first fuel (F1) can intermix with the supply of air (A) within the first mixing region 630. The combination of the supply of air (A) and the first fuel (F1) moves toward the second mixing region 632.

The mixture of the first fuel (F1) and the supply of air (A) then moves toward the second fuel supply 624 in a direction toward the forward end 610. The conic shape, or portion thereof, for the second portion 608 decreases the diameter of the mixture of the first fuel (F1) and the supply of air (A) as it approaches the second fuel supply 624, as well as accelerating the flow. The second fuel (F2) is injected from the second fuel supply 624 and introduced into the helical mixture of the supply of air (A) and the first fuel (F1) provided from the first mixing region 630. The mixture of the first and second fuels (F1), (F2) and the supply of air (A) can then pass within the second mixing region 632 toward the outlet 616 through the centerbody passage 634, further intermixing, where the mixture of the supply of air (A), the first fuel (F1), and the second fuel (F2) can exhaust from the fuel injector 600 at the outlet 616 for combustion. As the mixture of the supply of air (A) and the first fuel (F1) interact with the second fuel (F2), the helical flow reverses direction or turns in an opposite direction near the forward end 610 and decreases in diameter, such that the mixture of the supply of air (A), the first fuel (F1), and the second fuel (F2) within the second mixing region 632 positions or passes radially interior of the mixture in the first mixing region 630 of the supply of air (A) and the first fuel (F1). In this way, the mixture of the first and second fuels (F1), (F2) and the supply of air (A) can exhaust from the outlet 616 passing radially interior of the first mixing region 630. The reversal of direction of the flow results due to the lack of additional space within the mixing passage 604, as well as the pressure drop and increase in flow speeds due to the reduction in space when moving from the first mixing region 630 to the second mixing region 632. The centerbody passage 634 can help to radially contain the mixture of the supply of air (A), the first fuel (F1) and the second fuel (F2) radially interior of the initial supply of air (A) to limit or prevent interaction among the second mixing region 632 and the initial supply of air (A) introduced from the air passage 612.

The first fuel (F1) can be a liquid or atomized fuel supply, passing along the first mixing region 630 and the second fuel (F2) can be a gaseous fuel, like hydrogen fuel or non-diluent hydrogen fuel, passing along the second mixing region 632. The liquid fuels can require greater mixing lengths or times as compared to that of the gaseous fuels. The fuel injector 600 provides for injecting a liquid fuel within a first mixing region 630, permitting additional length for intermixing of liquid fuels, prior to injection of the second fuel (F2). The first fuel (F1) can continue to intermix with the supply of air (A) as it enters the second mixing region 632, while simultaneously intermixing with the second fuel (F2). That is, the first fuel (F1) intermixes among both the first and second mixing regions 630, 632, providing a relatively longer mixing length as compared with that of the second fuel (F2) intermixing within the second mixing region 632. The second fuel (F2), being a gaseous fuel, requires a relatively shorter mixing length and need only intermix within the second mixing region 632. Therefore, the fuel injector 600 providing a longer length for intermixing a first liquid fuel, and a relatively shorter second mixing region 632 to permit intermixing of a gaseous fuel, thereby achieving proper intermixing among both liquid and gaseous fuels within the mixing passage 604.

The cyclonic intermixing within the first and second mixing regions 630, 632 can provide for greater intermixing among the supply of air (A), the first fuel (F1), and the second fuel (F2). The cyclonic structure provides for a shortened total length for the fuel injector 600, while providing the first mixing region 630 for a liquid fuel prior to entry into a second mixing region 632, providing a suitable mixing length for both a liquid fuel and a gaseous fuel within the mixing passage 604.

The end wall 636 further provides coaxial shielding of the mixing passage 604 against flashback of combustion of a mixture of fuel and air exhausting the outlet 616. Furthermore, the swirling supply of air (A) provided from the air passage 612 imparts a relatively high heat transfer coefficient along the end wall 636 and the centerbody 618 (compared to that of other portions of the fuel injector 600) that can improve thermal performance at the outlet 616, as well as mitigating thermal stresses. Additionally, the swirling flow within the mixing passage 604 can shield the outer wall 602 from flashback extending into mixing passage 604 through the centerbody passage 634.

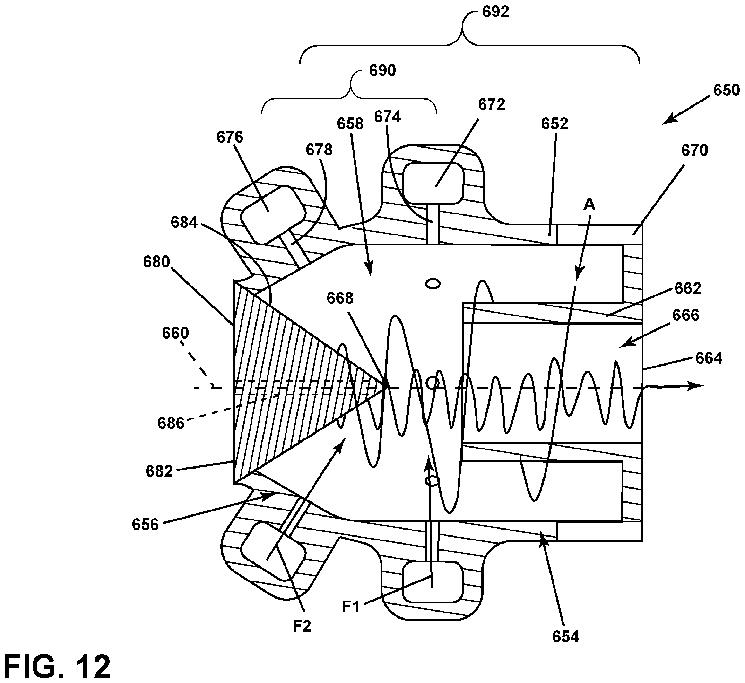

Referring to FIG. 12, a cross-sectional view of a fuel injector 650 is shown, which can be substantially similar to that of FIG. 11, with an outer wall 652 defining a first portion 654 having a cylindrical shape and a second portion 656 with a conic shape. The outer wall 652 surrounds a mixing passage 658 and defines a fuel injector axis 660. A centerbody 662 positions within the mixing passage 658 spaced from the outer wall 652. The mixing passage 658 further includes a centerbody passage 666 that exhausts at an outlet 664 defined within the centerbody 662.

An air passage 670 provides a supply of air (A) to the mixing passage 658. A first fuel supply 672 can supply a first fuel (F1) to the mixing passage 658 via a first fuel passage 674 at the first portion 654. A second fuel supply 676 supplies a second fuel (F2) to the mixing passage 658 via a second fuel passage 678 at the second portion 656. It should be appreciated that the air passage 670, the first and second fuel supplies 672, 676, and the first and second fuel passages 674, 678 can be arranged as a set of annular supplies and passages arranged about the outer wall 652.

A protuberance 680 is positioned at a forward end 682 of the outer wall 652 and extends into the mixing passage 658. The protuberance 680 has a conic shape, defining a conic shape for an exterior surface 684 confronting the mixing passage 658. In alternative, non-limiting examples, any annular shape for the protuberance 680 is contemplated such as a cylindrical shape, spherical shape, a rounded or curved shape, a linear, rectilinear, or curvilinear shape, or combinations thereof. An annular shape for the protuberance 680, such as the conic shape as shown, facilitates a rotational flow of fluid within the mixing passage 658. The protuberance 680 terminates at a point 668, while a rounded end or other shapes are contemplated. Additionally, it is contemplated that a protuberance passage 686 (shown in broken line) can extend through the protuberance 680, such as providing a purge flow, an air flow, or other fluid such as steam or water in non-limiting examples.

A first mixing region 690 can be defined within the mixing passage 658 extending from the first fuel supply 672 within the first portion 654 to within the second portion 656 in a direction toward the forward end 610, similar to that of FIG. 11. A second mixing region 692 can be defined within the mixing passage 658 extending from the second fuel supply 676 within the second portion 656 to the outlet 664. In an alternative example, it is contemplated that the second mixing region 692 can extend toward the forward end 682 and then turn, extending toward the outlet 664. The second mixing region 692 can overlap with the first mixing region 690, similar to that discussed in reference to FIG. 11. When the second fuel (F2) is introduced through the second fuel supply 676 it mixes with the mixture of the first fuel (F1) and the supply of air (A) from the first mixing region 690, thereby intermixing the supply of air (A), the first fuel (F1), and the second fuel (F2) within the second mixing region 692.

In operation, a supply of air (A) is provided to the air passage 670, where the supply of air (A) swirls within the mixing passage 658 in the first portion 654 about the centerbody 662. A first fuel (F1) is introduced from the first fuel supply 672 from the first fuel passage 674 and intermixes with the supply of air (A) within the first portion 654 and the first mixing region 690. The mixture of the supply of air (A) and the first fuel (F1) passes to the second portion 656, where the second fuel supply 676 introduces a second fuel (F2) through the second fuel passage 678. The second fuel (F2) intermixes with the mixture of the supply of air (A) and the first fuel (F1) within the second mixing region 692, overlapping with the first mixing region 690, and passes to exhaust at the outlet 664.

The protuberance 680 defines a minimum diameter for the swirling flow within the mixing passage 658 within the second mixing region 692. In a non-limiting example, it is contemplated that the protuberance 680 can extend within the first mixing region 690 and can at least partially define the first mixing region 690. The protuberance 680 can define a decreased cross-sectional area within the mixing passage 658 along the second mixing region 692 and the second portion 656.

The first fuel (F1) can be a liquid fuel or atomized liquid fuel, which benefits from the relatively longer mixing path along the first mixing region 690 and the second mixing region 692, as liquid fuels require a greater length to suitably intermix. The second fuel (F2) can be a gaseous fuel, such as a hydrogen fuel or non-diluent hydrogen fuel, which can require a relatively shorter second mixing region 692, as gaseous fuels intermix faster than liquid fuels. The first mixing region 690 forward of the second mixing region 692 permits the supply of air (A) and the liquid first fuel (F1) to intermix, then further intermixing the second fuel (F2) within the second mixing region 692 after permitting the first fuel (F1) and the supply of air (A) to at least partially intermix within the first mixing region 690.

The protuberance 680 can reduce the occurrence of dead spots within the mixing passage 658 where flow stagnation can occur by occupying a portion of the mixing passage 658, as well as facilitate the swirling flow about the annular shape of the protuberance 680. Additionally, the angle of the exterior surface 684 can at least partially define the rate at which the intermixed flows reduce in diameter when moving toward the outlet 664, which can be utilized to control rates of intermixing along one or both of the first and second mixing regions 690, 692.

It will be appreciated that the fuel injectors, and aspects thereof, as discussed herein are provided by way of example only and that in other exemplary embodiments, the fuel injectors may have any other suitable configuration. The aspects and features provided herein need not be limited to the embodiments as shown, and it is further contemplated that features and aspects from one or more embodiment can be added, removed, or interchanged with one or more other embodiment to define additional embodiments herein.

Benefits associated with the gas turbine engine, the combustor, and the fuel injectors as described herein include a fuel injector capable of intermixing a supply of air with a first fuel and a second fuel. Intermixing of the first fuel and the second fuel by way of the first and second mixing regions permits the intermixing of one or both of a liquid or atomized liquid fuel, a gaseous fuel such as hydrogen or non-diluent hydrogen fuels, with a supply of air for combustion in the combustor. As liquid fuels or atomized liquid fuels require a greater mixing length and time as compared to that of gaseous fuels such as hydrogen or non-diluent hydrogen, the fuel injector as described herein provides the first and second mixing regions to permit intermixing of one or both of liquid and gaseous fuels within a single fuel injector assembly. The different rates at which the supply of air, the first fuel or a liquid fuel, and a second fuel or a gaseous fuel are supplied to the fuel injector can be used to determine different mixing parameters, such as different ratios of different fuels or air. For example, fuel ratios for a hydrogen blend ranging from 0% to 100% hydrogen are possible within the fuel injectors, including non-diluent hydrogen. The incorporation of gaseous or hydrogen fuels with liquid or atomized liquid fuels can reduce emissions generated by combustion of the fuel mixtures as the use of hydrogen fuels can generate lesser or no emissions as compared to that of traditional liquid or atomized liquid fuels. Therefore, the fuel injectors as described herein permit a reduction in emissions generated by the use of the fuel injectors. In a non-limiting example, the fuel injectors as described herein can permit emissions that contain less than 15 parts per million (ppm) of nitrogen oxides (NOₓ).

Furthermore, the fuel injectors as described herein permit intermixing of multiple different fuels or fuel types that can require different mixing times or lengths. With such suitable intermixing lengths, flame holding or flashback behavior is reduced or eliminated through the proper intermixing of both liquid and gaseous fuels, which can reduce required maintenance or increase component lifetime under high cycle fatigue.

Further still, the fuel injectors as described herein can permit the use of only a single fuel, such as by closing one fuel supply or failing to permit the supply of fuel from one fuel supply. The fuel injectors still permit proper intermixing of the single fuel with a supply of air regardless of fuel type, as the fuel injectors provide proper mixing lengths for the different fuel types. The use of a single fuel type can also be utilized at different engine cycle points or operational conditions, such that one or both of combustion and emissions can be optimized at the different engine cycle points or operational conditions.

It should be appreciated that the different fuel injectors and their features as described among FIGS. 4 and 6-12 can all be utilized within a common engine, such as the turbine engine 10 of FIG. 1, or within a common component, such as the combustor 30 of FIG. 2, and it should be understood that the fuel injectors and their features are not mutually exclusive.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects are provided by the subject matter of the following clauses:
A fuel injector for a gas turbine engine comprising a compressor section, combustor section, and turbine section is serial flow arrangement, the fuel injector comprising: an outer wall at least partially defining a mixing passage extending along a stream-wise direction and defining a fuel injector axis, the mixing passage including a first mixing region and a second mixing region in serial arrangement; a first fuel passage fluidly coupled to the mixing passage at the first mixing region; a first air passage fluidly coupled to the mixing passage; and a second fuel passage fluidly coupled to the mixing passage at the second mixing region.

The fuel injector of any preceding clause, further comprising a second air passage fluidly coupled to the mixing passage.

The fuel injector of any preceding clause, wherein the first air passage fluidly couples to the mixing passage at the first mixing region.

The fuel injector of any preceding clause, wherein the second air passage fluidly couples to the mixing passage at the second mixing region.

The fuel injector of any preceding clause, further comprising a centerbody extending between a forward end and an aft end, the centerbody positioned within the outer wall and at least partially defining the mixing passage.

The fuel injector of any preceding clause, further comprising an interior within the centerbody.

The fuel injector of any preceding clause, further comprising a first centerbody passage coupling the interior to the mixing passage at the first mixing region.

The fuel injector of any preceding clause, further comprising a second centerbody passage positioned aft of the first centerbody passage.

The fuel injector of any preceding clause, wherein the interior comprises a first converging portion, a diverging portion extending from the first converging portion, and a second converging portion extending from the diverging portion opposite of the first converging portion.

The fuel injector of any preceding clause, wherein the centerbody further comprises a second centerbody passage at the aft end.

The fuel injector of any preceding clause, wherein the second centerbody passage exhausts to the second mixing region.

The fuel injector of any preceding clause, wherein the aft end is blunt or pointed.

The fuel injector of any preceding clause, wherein the first air passage fluidly couples to the mixing passage aft of the first fuel passage.

The fuel injector of any preceding clause, further comprising a second air passage fluidly coupled to the mixing passage at the second mixing region, and wherein the second fuel passage fluidly couples to the mixing passage aft of the second air passage.

The fuel injector of any preceding clause, wherein the first fuel passage is a liquid fuel passage ad the second fuel passage is a gaseous fuel passage.

The fuel injector of any preceding clause, further comprising a set of turbulators in annular arrangement extending from the outer wall into the mixing passage.

The fuel injector of any preceding clause, wherein the set of turbulators are positioned within the first mixing region.

The fuel injector of any preceding clause, wherein the set of turbulators are positioned where the first mixing region meets the second mixing region.

The fuel injector of any preceding clause, wherein the second mixing region is arranged forward of the set of turbulators.

The fuel injector of any preceding clause, further comprising a second air passage fluidly coupled to the mixing passage.

The fuel injector of any preceding clause, wherein the second air passage exhausts to the mixing passage through the set of turbulators.

The fuel injector of any preceding clause, further comprising a third fuel passage exhausting to the first air passage.

The fuel injector of any preceding clause, further comprising a third air passage fluidly coupled to the mixing passage at the first mixing region.

A fuel injector for a turbine engine, the fuel injector comprising: an outer wall in annular arrangement about a mixing passage, defining a fuel injector axis, and exhausting at an outlet, the mixing passage including a first mixing region and a second mixing region in serial arrangement, the first mixing region having a first length and the second mixing region having a second length, the first length longer than the second length; a first air passage extending through the outer wall to provide a supply of air to the mixing passage; a liquid fuel passage fluidly coupled to the mixing passage at the first mixing region; and a gaseous fuel passage fluidly coupled to the mixing passage at the second mixing region.

The fuel injector of any preceding clause, wherein the second mixing region passes interior of the first mixing region.

The fuel injector of any preceding clause, wherein the outer wall along the first mixing region is cylindrical and the outer wall along the second mixing region is conic.

The fuel injector of any preceding clause, further comprising a centerbody positioned interior of the first air passage.

The fuel injector of any preceding clause, wherein the first air passage is arranged perpendicular to the outer wall.

The fuel injector of any preceding clause, wherein the first air passage is offset from perpendicular to the outer wall.

The fuel injector of any preceding clause, wherein the liquid fuel passage is offset from perpendicular to the outer wall.

The fuel injector of any preceding clause, wherein the gaseous fuel passage is offset from perpendicular to the outer wall.

The fuel injector of any preceding clause, wherein the offset is greater than or equal to negative seventy degrees (-70°) and less than or equal to seventy degrees (70°).

The fuel injector of any preceding clause, wherein the offset is non-zero.

The fuel injector of any preceding clause, wherein a flow area is defined as the cross-sectional area of the mixing passage defined perpendicular to the fuel injector axis, wherein a bluff body area is defined as the cross-sectional area for the outer wall defined perpendicular to the fuel injector axis, and wherein a ratio of flow area to bluff body area is greater than or equal to 0.01 and less than or equal to 10.

The fuel injector of any preceding clause, wherein a supply of fuel from at least the liquid fuel passage and the gaseous fuel passage and a supply of air from at least the first air passage defines a fuel to air ratio as the ratio of the supply of fuel to the supply of air, wherein the fuel to air ratio is greater than or equal to 0.005 and less than or equal to 0.060.

The fuel injector of any preceding clause, wherein the outer wall further defines an outlet for the mixing passage having an outlet diameter, wherein the mixing passage defines a mixing length defined in a direction along the fuel injector axis, and wherein a ratio of the mixing length to the outlet diameter is greater than zero and less than or equal to 200.

A fuel injector for a gas turbine engine comprising a compressor section, combustor section, and turbine section is serial flow arrangement, the fuel injector comprising: an outer wall surrounding a mixing passage and defining a fuel injector axis, the mixing passage including a first mixing region and a second mixing region; a first air passage fluidly coupled to the mixing passage; a first fuel passage fluidly coupled to the mixing passage at the first mixing region; and a second fuel passage fluidly coupled to the mixing passage at the second mixing region; wherein at least a portion of the second mixing region is located interior of the first mixing region.

The fuel injector of any preceding clause, wherein the first air passage is positioned forward of the first mixing region.

The fuel injector of any preceding clause, wherein the second mixing region includes a decreasing cross-sectional area.

The fuel injector of any preceding clause, wherein a first flow direction along at least a portion of the first mixing region is opposite of a second flow direction along at least a portion of the second mixing region.

The fuel injector of any preceding clause, wherein the first mixing region overlaps with at least a portion of the second mixing region defined in a direction perpendicular to the fuel injector axis.

The fuel injector of any preceding clause, wherein the first mixing region overlaps with an entirety of the second mixing region.

The fuel injector of any preceding clause, further comprising a centerbody positioned within the mixing passage and spaced from the outer wall.

The fuel injector of any preceding clause, further comprising an end wall extending between the outer wall and the centerbody.

The fuel injector of any preceding clause, wherein the end wall defines an outlet for the mixing passage.

The fuel injector of any preceding clause, wherein the outer wall includes a first portion having a cylindrical shape at least partially defining the first mixing region and a second portion having a conic shape at least partially defining the second mixing region.

The fuel injector of any preceding clause, wherein at least one of the first fuel passage or the second fuel passage is arranged perpendicular to the outer wall.

The fuel injector of any preceding clause, wherein at least one of the first fuel passage or the second fuel passage is arranged offset from perpendicular to the outer wall.

The fuel injector of any preceding clause, further comprising a protuberance extending into the mixing passage within the second mixing region.

The fuel injector of any preceding clause, wherein the protuberance is conic.

The fuel injector of any preceding clause, wherein the protuberance includes a protuberance passage extending through the protuberance.

The fuel injector of any preceding clause, wherein the protuberance passage exhausts to the mixing passage.

The fuel injector of any preceding clause, wherein a flow area is defined as the cross-sectional area of the mixing passage defined perpendicular to the fuel injector axis, wherein a bluff body area is defined as the cross-sectional area for the outer wall defined perpendicular to the fuel injector axis, and wherein a ratio of flow area to bluff body area is greater than or equal to 0.01 and less than or equal to 10.

The fuel injector of any preceding clause, wherein a supply of fuel from at least the liquid fuel passage and the gaseous fuel passage and a supply of air from at least the first air passage defines a fuel to air ratio as the ratio of the supply of fuel to the supply of air, wherein the fuel to air ratio is greater than or equal to 0.005 and less than or equal to 0.060.

The fuel injector of any preceding clause, wherein the outer wall further defines an outlet for the mixing passage having an outlet diameter, wherein the mixing passage defines a mixing length defined in a direction along the fuel injector axis, and wherein a ratio of the mixing length to the outlet diameter is greater than zero and less than or equal to 200.

A fuel injector for a gas turbine engine comprising a compressor section, combustion section, and turbine section is serial flow arrangement, the fuel injector comprising: an outer wall defining a fuel injector axis and at least partially defining a mixing passage including a first mixing region and a second mixing region in serial arrangement; a first fuel passage fluidly coupled to the mixing passage at the first mixing region; a first air passage fluidly coupled to the mixing passage; and a second fuel passage fluidly coupled to the mixing passage at the second mixing region.

The fuel injector of any preceding clause, further comprising a second air passage fluidly coupled to the mixing passage.

The fuel injector of any preceding clause, wherein the second fuel passage fluidly couples to the mixing passage aft of the second air passage.

The fuel injector of any preceding clause, further comprising a centerbody positioned within the outer wall and at least partially defining the mixing passage.

The fuel injector of any preceding clause, further comprising an interior within the centerbody.

The fuel injector of any preceding clause, further comprising a first centerbody passage fluidly coupling the interior to the mixing passage at the first mixing region.

The fuel injector of any preceding clause, further comprising a second centerbody passage positioned aft of the first centerbody passage.

The fuel injector of any preceding clause, wherein the second centerbody passage exhausts to the second mixing region.

The fuel injector of any preceding clause, wherein the first fuel passage is configured as a liquid fuel passage and the second fuel passage is configured as a gaseous fuel passage.

The fuel injector of any preceding clause, further comprising a set of turbulators in annular arrangement extending from the outer wall into the mixing passage.

The fuel injector of any preceding clause, wherein the set of turbulators are positioned within the first mixing region.

The fuel injector of any preceding clause, further comprising a third fuel passage exhausting to the first air passage.

A fuel injector for a turbine engine, the fuel injector comprising: an outer wall in annular arrangement about a mixing passage, defining a fuel injector axis, and exhausting at an outlet, the mixing passage including a first mixing region and a second mixing region in serial arrangement, the first mixing region having a first length and the second mixing region having a second length, the first length longer than the second length; a first air passage extending through the outer wall to provide a supply of air to the mixing passage; a liquid fuel passage fluidly coupled to the mixing passage at the first mixing region; and a gaseous fuel passage fluidly coupled to the mixing passage at the second mixing region.

The fuel injector of any preceding clause, wherein at least one of the first mixing region or the second mixing region turns in an opposite direction, and wherein at least a portion of the second mixing region positions interior of the first mixing region.

The fuel injector of any preceding clause, wherein the outer wall along the first mixing region is cylindrical and the outer wall along the second mixing region is conic.

The fuel injector of any preceding clause, further comprising a centerbody positioned interior of the first air passage.

The fuel injector of any preceding clause, wherein the gaseous fuel passage is offset from perpendicular to the outer wall at an angle that is greater than or equal to negative seventy degrees (-70°) and less than or equal to seventy degrees (70).

The fuel injector of any preceding clause, wherein a flow area is defined as a cross-sectional area of the mixing passage defined perpendicular to the fuel injector axis at an injector outlet, wherein a bluff body area is defined as the cross-sectional area for an aft face of the outer wall defined perpendicular to the fuel injector axis, and wherein a ratio of flow area to bluff body area is greater than or equal to 0.01 and less than or equal to 10.

The fuel injector of any preceding clause, wherein a fuel to air ratio as a ratio of the supply of fuel to the supply of air is greater than or equal to 0.005 and less than or equal to 0.060.

The fuel injector of any preceding clause, wherein the outlet for the mixing passage defines an outlet diameter, wherein the mixing passage defines a mixing length defined in a direction along the fuel injector axis, and wherein a ratio of the mixing length to the outlet diameter is greater than zero and less than or equal to 200.

## Claims

1. A fuel injector (102) for a gas turbine engine (10) comprising a compressor section (22), combustion section (28), and turbine section (32) is serial flow arrangement, the fuel injector (102) comprising:
an outer wall (150) defining a fuel injector axis (156) and at least partially defining a mixing passage (154) including a first mixing region (240) and a second mixing region (242) in serial arrangement;
a first fuel passage (164) fluidly coupled to the mixing passage (154) at the first mixing region (240);
a first air passage (180) fluidly coupled to the mixing passage (154); and
a second fuel passage (166) fluidly coupled to the mixing passage (154) at the second mixing region (242).

2. The fuel injector (102) of claim 1, further comprising a second air passage (182) fluidly coupled to the mixing passage (154).

3. The fuel injector (102) of claim 2, wherein the second fuel passage (166) fluidly couples to the mixing passage (154) aft of the second air passage (182).

4. The fuel injector (102) of any preceding claim, further comprising a centerbody (154) positioned within the outer wall (150) and at least partially defining the mixing passage (154).

5. The fuel injector (102) of claim 4, further comprising an interior (190) within the centerbody (152).

6. The fuel injector (102) of claim 5, further comprising a first centerbody passage (196) fluidly coupling the interior (190) to the mixing passage (154) at the first mixing region (240).

7. The fuel injector (102) of claim 6, further comprising a second centerbody passage (202) positioned aft of the first centerbody passage (196).

8. The fuel injector (102) of claim 7, wherein the second centerbody passage (202) exhausts to the second mixing region (242).

9. The fuel injector (102) of any preceding claim, wherein the first fuel passage (164) is configured as a liquid fuel passage and the second fuel passage (166) is configured as a gaseous fuel passage.

10. The fuel injector (102) of any preceding claim, further comprising a set of turbulators (220) in annular arrangement extending from the outer wall (150) into the mixing passage (154).

11. The fuel injector (102) of claim 10, wherein the set of turbulators (220) are positioned within the first mixing region (240).

12. The fuel injector (102) of any preceding claim, further comprising a third fuel passage (464) exhausting to the first air passage (180).

13. The fuel injector (102) of any preceding claim, wherein a flow area is defined as a cross-sectional area of the mixing passage (154) defined perpendicular to the fuel injector axis (156) at an injector outlet (158), wherein a bluff body area is defined as the cross-sectional area for an aft face (172) of the outer wall (150) defined perpendicular to the fuel injector axis (156), and wherein a ratio of flow area to bluff body area is greater than or equal to 0.01 and less than or equal to 10.

14. The fuel injector (102) of any preceding claim, wherein a fuel to air ratio as a ratio of a supply of fuel from the first fuel passage (164) and the second fuel passage (166) to a supply of air from the first air passage (180) is greater than or equal to 0.005 and less than or equal to 0.060.

15. The fuel injector (102) of any preceding claim, wherein an injector outlet (158) for the mixing passage (154) defines an outlet diameter (D), wherein the mixing passage (154) defines a mixing length (244, 246) defined in a direction along the fuel injector axis (156), and wherein a ratio of the mixing length (244, 246) to the outlet diameter (D) is greater than zero and less than or equal to 200.
